# EUROPEAN PATENT APPLICATION

(11) **EP 4 578 577 A1**
(43) Date of publication of application: **02.07.2025**
(21) Application number: 24217341.7
(22) Date of filing: 04.12.2024
(51) Int. Cl.: B23B 13/12

(54) **GUIDE BUSH APPARATUS AND ADJUSTMENT METHOD FOR GUIDE BUSH APPARATUS**

(30) Priority: 25.12.2023 JP 2023218630
(71) Applicant: Star Micronics Co., Ltd., Shizuoka-shi, Shizuoka 422-8654 (JP)
(72) Inventor: Deno, Masatoshi, Shizuoka-shi, Shizuoka (JP)
(74) Representative: Grünecker Patent- und Rechtsanwälte PartG mbB

(57) **Abstract**

Provided are a guide bush apparatus and an adjustment method for a guide bush apparatus, with which adjustments can be made easily.

A guide bush apparatus that supports a rod-shaped workpiece so that the workpiece is free to slide in the axis direction of the workpiece includes a guide bush sleeve, a guide bush that is disposed inside the guide bush sleeve, has a bush screw formed thereon, and has an inner diameter that changes in accordance with the relative position thereof relative to the guide bush sleeve in the axis direction, a retraction sleeve which is disposed inside the guide bush sleeve and on which a first screw that engages with the bush screw and a second screw having a different thread pitch from the first screw are formed, and a differential attachment/detachment body on which a differential screw that engages with the second screw is formed, and which can be fixed to and released from the guide bush sleeve.

## Description

### CROSS-REFERENCES

The application claims priority of Japanese Patent Application No. 2023-218630 filed on December 25, 2023. The contents of this application are incorporated herein by reference in their entirety.

### BACKGROUND OF THE INVENTION

### 1. Field of the Invention

The present invention relates to a guide bush apparatus that supports a rod-shaped workpiece so that the workpiece is free to slide in the axis direction of the workpiece, and an adjustment method for the guide bush apparatus.

### 2. Description of the Related Art

A well-known guide bush apparatus includes a guide bush that supports a tip end part of a rod-shaped workpiece gripped by a spindle so that the workpiece is free to slide in the axis direction of the workpiece (see Japanese Patent No. 6711527, for example). In a machine tool having the guide bush apparatus, the workpiece is supported in two locations, i.e., by the spindle and the guide bush apparatus, during machining such that bending of the workpiece is suppressed, and as a result, a long, thin workpiece in particular can be accurately machined. The guide bush apparatus described in Japanese Patent No. 6711527 includes a guide bush having an outer peripheral tapered surface on a tip end-side outer peripheral surface thereof, a guide bush sleeve that houses the guide bush in the inside thereof and has an inner peripheral tapered surface on a tip end-side inner peripheral surface thereof, and a retraction sleeve (a drawbar). By displacing relative positions of the guide bush and the guide bush sleeve in the workpiece axis direction using the retraction sleeve, the pressing force between the outer peripheral tapered surface and the inner peripheral tapered surface can be changed, and thus the inner diameter of the guide bush can be adjusted. By adjusting the inner diameter of the guide bush, an appropriate gap can be formed between the guide bush and the workpiece. This gap is preferably extremely small, but if the gap is too small and the guide bush grips the workpiece forcefully, sliding resistance generated when the workpiece is moved in the axis direction increases, and therefore the gap requires fine adjustment.

In the guide bush apparatus described in Japanese Patent No. 6711527, a male screw is formed on a rear end-side outer periphery of the guide bush, and a female screw with a smaller pitch than the male screw of the guide bush is formed on a rear end-side inner peripheral surface of the guide bush sleeve. Further, a female screw that engages with the male screw of the guide bush is formed on the tip end-side outer periphery of the retraction sleeve and a male screw that engages with the female screw of the guide bush sleeve is formed on the rear end-side outer periphery of the retraction sleeve, thereby forming a differential mechanism. By using the differential mechanism, the relative positions of the guide bush and the guide bush sleeve in the axis direction displace only by the pitch difference between the female screw of the retraction sleeve and the male screw of the retraction sleeve when the retraction sleeve is rotated once, and therefore the inner diameter of the guide bush can be finely adjusted.

### SUMMARY OF THE INVENTION

However, with the guide bush apparatus described in Japanese Patent No. 6711527, although it is possible to make fine adjustments, a problem exists in that the amount of change in the inner diameter of the guide bush when the retraction sleeve performs a single rotation is small, meaning that the retraction sleeve must be rotated many times in order to set the guide bush at the desired inner diameter, and as a result, adjustment is complicated.

Note that in the guide bush apparatus described in Japanese Patent No. 6711527, the number of screw threads by which the male screw of the retraction sleeve and the female screw of the guide bush sleeve engage with each other at the point where the female screw of the retraction sleeve and the male screw of the guide bush engage with each other changes according to the position of the guide bush at that time. Therefore, the adjusted relative positions of the guide bush sleeve and the retraction sleeve in the axis direction vary greatly according to the number of engaged screw threads. As a result, when the guide bush has been adjusted to the desired inner diameter, the retraction sleeve may project much further rearward than the guide bush sleeve, and in this case, the retraction sleeve may come into contact with the spindle or the tool. In addition, depending on the number of engaged screw threads, as described above, the outer peripheral tapered surface of the guide bush and the inner peripheral tapered surface of the guide bush sleeve may not enter a state of being pressed together even when the retraction sleeve is screwed all the way into the hole formed in the guide bush sleeve. In this state, a problem occurs in that the engagement between the female screw of the retraction sleeve and the male screw of the guide bush must be released and adjustment performed again, making the adjustment operation even more complicated.

The present invention has been designed in consideration of the problems described above, and an object thereof is to provide a guide bush apparatus and an adjustment method for a guide bush apparatus, with which adjustments can be made easily.

A guide bush apparatus according to the present invention, for solving the problems described above, is a guide bush apparatus that supports a rod-shaped workpiece so that the workpiece is free to slide in the axis direction of the workpiece, and includes a guide bush sleeve, a guide bush that is disposed inside the guide bush sleeve, has a bush screw formed thereon, and has an inner diameter that changes in accordance with the relative position thereof relative to the guide bush sleeve in the axis direction, a retraction sleeve which is disposed inside the guide bush sleeve and on which a first screw that engages with the bush screw and a second screw having a different thread pitch from the first screw are formed, and a differential attachment/detachment body on which a differential screw that engages with the second screw is formed, and which can be fixed to and released from the guide bush sleeve.

According to this guide bush apparatus, by rotating the retraction sleeve in a state where the differential attachment/detachment body is not fixed to the guide bush sleeve, the guide bush can be moved by a large amount relative to the guide bush sleeve in the axis direction. Further, by rotating the retraction sleeve in a state where the differential attachment/detachment body and to the guide bush sleeve are fixed, the guide bush can be moved by a very small amount relative to the guide bush sleeve in the axis direction, and thus the guide bush can be adjusted easily.

Here, the guide bush apparatus may be configured to be free to rotate with the axis of the workpiece as the rotation axis. The retraction sleeve may be configured such that in the state where the differential attachment/detachment body is not fixed to the guide bush sleeve, the guide bush is moved in the axis direction relative to the guide bush sleeve by the thread pitch of the first screw each time the retraction sleeve rotates once relative to the guide bush, and in the state where the differential attachment/detachment body is fixed to the guide bush sleeve so that the second screw is capable of rotating relative to the differential screw, the guide bush is moved in the axis direction relative to the guide bush sleeve by the difference between the thread pitch of the first screw and the thread pitch of the second screw each time the retraction sleeve rotates once relative to the guide bush. The differential attachment/detachment body may be fixed to the guide bush sleeve by a fastening member. The guide bush may have, on an outer peripheral surface thereof, an outer peripheral tapered surface that increases in diameter toward the tip end side. Further, the guide bush sleeve may have, on an inner peripheral surface thereof, an inner peripheral tapered surface that increases in diameter toward the tip end side. The bush screw, the first screw, the second screw, and the differential screw may be configured to have the axis direction as an axial direction.

In this guide bush apparatus, a switching member for switching between a non-rotatable state in which relative rotation between the retraction sleeve and the differential attachment/detachment body is impossible and a rotatable state in which relative rotation between the retraction sleeve and the differential attachment/detachment body is possible may be provided.

According to this aspect, it is possible to switch between the non-rotatable state and the rotatable state easily.

Here, a slit that divides the second screw may be formed in the retraction sleeve, and the switching member may switch between the non-rotatable state and the rotatable state by changing the width of the slit so as to change the pressing force between the second screw and the differential screw. The slit may be formed along the circumferential direction of the second screw partially in the circumferential direction. Furthermore, the switching member may set the non-rotatable state by increasing the width of the slit so as to increase the pressing force between the second screw and the differential screw.

In this guide bush apparatus, the first screw may have a larger thread pitch than the second screw.

Thus, by rotating the retraction sleeve in a state where the differential attachment/detachment body is not fixed to the guide bush sleeve, the guide bush can be moved by a large amount in the axial direction relative to the guide bush sleeve, and as a result, the guide bush can be adjusted easily.

In this guide bush apparatus, a retaining member with which the differential attachment/detachment body is fixed to the guide bush sleeve by tightening a fastening member so that the differential attachment/detachment body is clamped between the guide bush sleeve and the retaining member may be provided, and the differential attachment/detachment body may be released from the retaining member by loosening the tightened fastening member so as to become free to rotate relative to the guide bush sleeve.

By loosening the tightened fastening member and rotating the retraction sleeve together with the differential attachment/detachment body, the engagement between the bush screw and the first screw can be released, whereby the guide bush can be removed from the guide bush sleeve, and moreover, the bush screw can be engaged with the first screw, whereby the guide bush can be attached and detached without removing the fastening member. As a result, there is no danger of the fastening member falling out during an operation to replace the guide bush.

Furthermore, an adjustment method for a guide bush apparatus according to the present invention, for solving the problems described above, is an adjustment method for a guide bush apparatus that supports a rod-shaped workpiece so that the workpiece is free to slide in the axis direction of the workpiece, the guide bush apparatus including a guide bush sleeve, a guide bush having an inner diameter that changes in accordance with a relative position thereof relative to the guide bush sleeve in the axis direction, a retraction sleeve on which a first screw that engages with a bush screw formed on the guide bush and a second screw having a different thread pitch from the first screw are formed, and a differential attachment/detachment body on which a differential screw that engages with the second screw is formed, the adjustment method including: a rough adjustment step for moving the guide bush relative to the guide bush sleeve in the axis direction by rotating the retraction sleeve, which is in a non-rotatable state so as to be incapable of rotating relative to the differential attachment/detachment body, relative to the guide bush; a switching step for establishing a rotatable state in which relative rotation between the retraction sleeve and the differential attachment/detachment body is possible by fixing the differential attachment/detachment body to the guide bush sleeve following completion of the rough adjustment step; and a fine adjustment step for moving the guide bush relative to the guide bush sleeve in the axis direction by rotating the retraction sleeve relative to the guide bush and the differential attachment/detachment body following completion of the switching step.

According to this guide bush adjustment method, in the rough adjustment step, the guide bush can be moved relatively by a large amount, and in the fine adjustment step, the guide bush can be moved relatively by a very small amount, and thus the guide bush can be adjusted easily.

Here, a rotation prohibition step executed before the rough adjustment step in order to establish the non-rotatable state in which relative rotation between the retraction sleeve and the differential attachment/detachment body is impossible may be provided. Further, a final switching step for setting the retraction sleeve and the differential attachment/detachment body in the non-rotatable state once the fine adjustment step is complete may also be provided. Furthermore, the rough adjustment step may be a step for moving the guide bush in the axis direction relative to the guide bush sleeve in accordance with the engagement between the bush screw and the first screw. Moreover, the fine adjustment step may be a step for moving the guide bush in the axis direction relative to the guide bush sleeve in accordance with the engagement between the bush screw and the first screw and the engagement between the second screw and the differential screw.

According to the present invention, it is possible to provide a guide bush apparatus and an adjustment method for a guide bush apparatus, with which adjustments can be made easily.

### BRIEF DESCRIPTION OF THE DRAWINGS

FIG. 1 is a simplified plan view showing an internal configuration of an NC lathe according to an embodiment;
FIG. 2 is a sectional perspective view seen from slightly above and diagonally from behind, and obtained by cutting the guide bush apparatus shown in FIG. 1 on a vertical plane passing through the axis;
FIG. 3 is a sectional view obtained by cutting the guide bush apparatus shown in FIG. 2 on a vertical plane passing through the axis;
FIG. 4A is an exploded perspective view of the guide bush apparatus shown in FIG. 2, and FIG. 4B is an exploded sectional view obtained by cutting the guide bush apparatus shown in FIG. 2 on a vertical plane passing through the axis;
FIG. 5 is a perspective view showing, from slightly above and diagonally from the front, a state in which an anti-rotation jig is attached to the guide bush apparatus shown in FIG. 2;
FIG. 6 is a flowchart showing a process for attaching a guide bush, a retraction sleeve, and a differential attachment/detachment body to a guide bush sleeve, and a process for adjusting the inner diameter of the guide bush;
FIG. 7A is a sectional view showing the manner in which a retraction unit shown in FIG. 2 is inserted into the guide bush sleeve, and FIG. 7B is a sectional view showing the manner in which fastening screws are fastened to the guide bush apparatus once rough adjustment is complete;
FIGS. 8A to 8D are sectional views of the guide bush apparatus, illustrating a rotation state switching process and a fine adjustment process;
FIG. 9 is a flowchart showing a process for removing the retraction unit and the guide bush from the guide bush sleeve;
FIG. 10 is a similar sectional perspective view to FIG. 2, seen from slightly above and diagonally from behind and obtained by cutting a guide bush apparatus according to a second embodiment on a vertical plane passing through the axis;
FIG. 11A is an exploded perspective view of the guide bush apparatus shown in FIG. 10, and
FIG. 11B is an exploded sectional view obtained by cutting the guide bush apparatus shown in

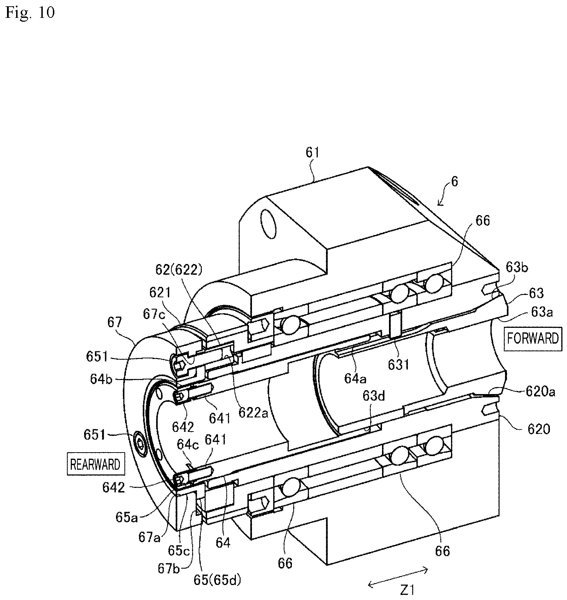

FIG. 10 on a vertical plane passing through the axis; and

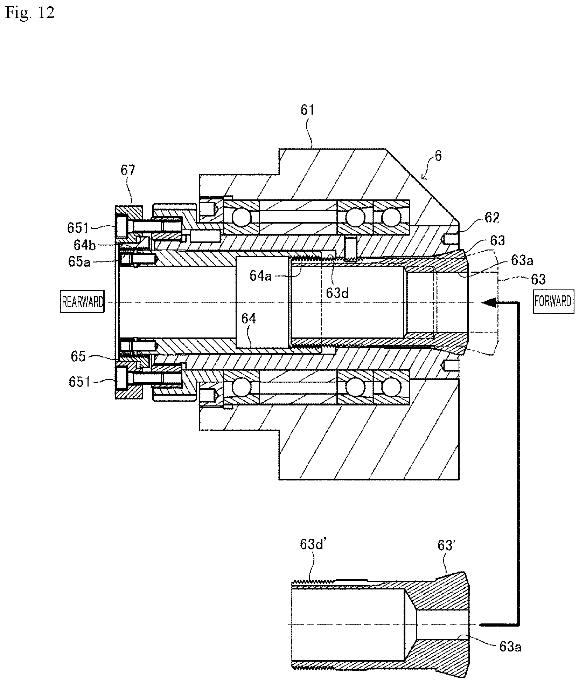

FIG. 12 is a sectional view showing the manner in which the guide bush is replaced in the guide bush apparatus shown in FIG. 10.

### DESCRIPTION OF THE PREFERRED EMBODIMENTS

An embodiment of the present invention will be described below with reference to the figures. In the example described in this embodiment, the present invention is applied to a guide bush apparatus provided in a Swiss-type numerical control (NC) lathe.

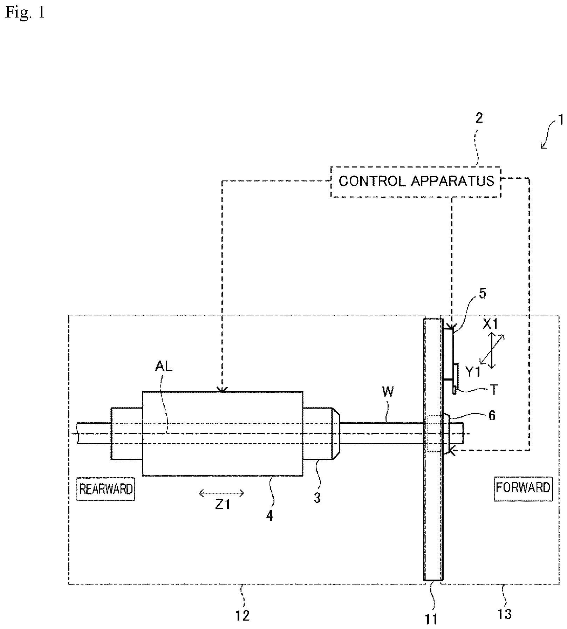

FIG. 1 is a simplified plan view showing an internal configuration of an NC lathe 1 according to this embodiment.

As shown in FIG. 1, the NC lathe 1 includes a control apparatus 2, a spindle 3, a headstock 4, a tool post 5, and a guide bush apparatus 6. The control apparatus 2 is a computer that operates the spindle 3, the headstock 4, the tool post 5, and the guide bush apparatus 6 in accordance with an NC program. Note that in addition to the operation using the NC program, the NC lathe 1 can also be operated by putting commands directly into the control apparatus 2 from an operating unit, not shown in the figures. A partition wall 11 is fixed to a leg serving as a base of the NC lathe 1. The interior of the NC lathe 1 is partitioned by the partition wall 11 into a headstock chamber 12 and a machining chamber 13. Hereinafter, the headstock chamber 12 side will be referred to as the rear, and the machining chamber 13 side will be referred to as the front. In FIG. 1, the right side of the figure is the front, and the left side of the figure is the rear.

The spindle 3 changes state between a gripping state, in which the spindle 3 grips an elongated, rod-shaped workpiece W inserted into the interior thereof, and a grip release state, in which the spindle 3 releases the grip on the workpiece W, in response to a signal from the control apparatus 2. The spindle 3 is mounted on the headstock 4 so as to be free to rotate. A spindle motor, not shown in the figure, rotates upon reception of a signal from the control apparatus 2, whereby the spindle 3 rotates together with the workpiece W gripped by the spindle 3 about an axis AL of the workpiece W. In other words, the axis AL of the workpiece W is also the rotation axis of the spindle 3.

The headstock 4 moves in a Z1-axis direction together with the spindle 3 in response to a signal from the control apparatus 2. The Z1-axis direction is a horizontal direction, and the left-right direction in FIG. 1. The Z1-axis direction matches the axis AL direction of workpiece W.

The tool post 5 is attached to the partition wall 11 so as to be capable of moving in an X1-axis direction, which is orthogonal to the Z1-axis direction and oriented in a horizontal direction, and a Y1-axis direction, which is oriented in a vertical direction. The tool post 5 moves in the X1-axis direction and the Y1-axis direction upon reception of a signal from the control apparatus 2. In FIG. 1, the up-down direction is the X1-axis direction, and a direction that is orthogonal to the paper surface is the Y1-axis direction. A machining tool T for machining the workpiece W is mounted on the tool post 5. FIG. 1 shows the manner in which the machining tool T is mounted on the tool post 5. A plurality of types of machining tools T, including a cutting tool for outer diameter machining, a cutting tool for cut-off machining, and so on, are attached to the tool post 5 side by side in the Y1-axis direction. The desired machining tool T is selected from these plurality of types of machining tools T by moving the tool post 5 in the Y1-axis direction. Then, by moving the tool post 5 in the X1-axis direction, the selected machining tool T cuts into the workpiece W gripped by the spindle 3 so as to machine the workpiece W.

The guide bush apparatus 6 supports a tip end part of the workpiece W, which is gripped by the spindle 3 so that the tip end side thereof projects frontward from the spindle 3, so that the workpiece W is free to slide in the axis AL direction of the workpiece W. The guide bush apparatus 6 includes a rotating part that rotates about the axis AL of the workpiece in synchronization with the spindle 3 when a guide bush motor, not shown in the figure, rotates upon reception of a signal from the control apparatus 2. In other words, the axis AL of the workpiece is also the rotation axis of the guide bush apparatus 6. Bending of the workpiece W during machining is suppressed by the existence of the guide bush apparatus 6, and therefore long, thin workpieces W in particular can be machined accurately.

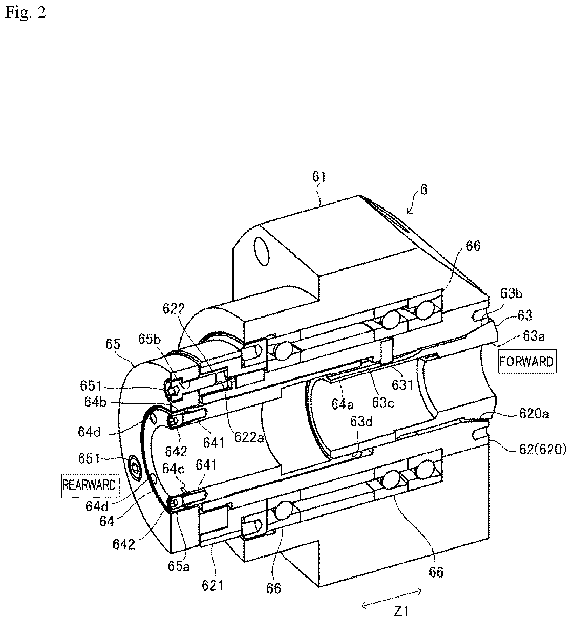

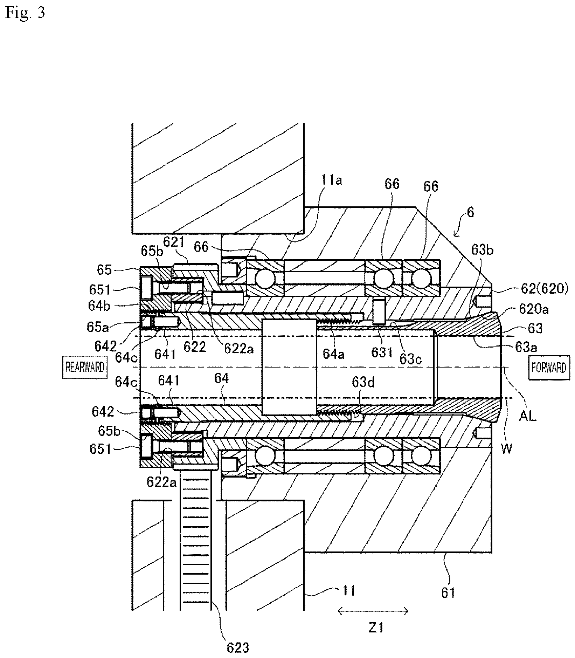

FIG. 2 is a sectional perspective view seen from slightly above and diagonally from behind, and obtained by cutting the guide bush apparatus 6 shown in FIG. 1 on a vertical plane passing through the axis AL. Further, FIG. 3 is a sectional view obtained by cutting the guide bush apparatus 6 shown in FIG. 2 on a vertical plane passing through the axis AL. Note that in FIG. 2, shading indicating the cross-section has not been added. Furthermore, in FIG. 3, the partition wall 11 and a timing belt 623, to be described below, are illustrated by solid lines, while only the outer periphery of the workpiece W is illustrated using dot-dot-dash lines.

As shown in FIG. 2, the guide bush apparatus 6 includes a guide bush body 61, a guide bush sleeve 62, a guide bush 63, a retraction sleeve 64, a differential attachment/detachment body 65, and a bearing 66. Of these components, the guide bush sleeve 62, the guide bush 63, the retraction sleeve 64, and the differential attachment/detachment body 65 are rotating parts that rotate with the axis AL as the rotation center. The guide bush body 61 is a block body having a space for housing the guide bush sleeve 62 formed in the interior thereof, and a rear part thereof has a cylindrical shape. Further, the guide bush sleeve 62, the guide bush 63, and the retraction sleeve 64 have a substantially cylindrical shape, while the differential attachment/detachment body 65 has a substantially annular shape.

As shown in FIG. 3, the rear cylindrical part of the guide bush body 61 is inserted into a guide bush attachment hole 11a formed in the partition wall 11, whereupon the guide bush body 61 is fixed to the partition wall 11 by a screw, not shown in the figure. The front part of the guide bush body 61 projects into the headstock chamber 12 (see FIG. 1).

The guide bush sleeve 62 is supported on the guide bush body 61 by three bearings 66 so as to be free to rotate with the axis AL as the rotation center and unable to move in the axis AL direction. The guide bush sleeve 62 includes a sleeve body 620, a pulley 621, and an inner ring nut 622. An inner peripheral tapered surface 620a that increases in diameter toward the front is formed on a front end part of the sleeve body 620. The pulley 621 and the inner ring nut 622 are firmly attached to the sleeve body 620 such that the sleeve body 620, the pulley 621, and the inner ring nut 622 are substantially integrated. The timing belt 623 is wound around the pulley 621 in order to transmit driving force from the aforementioned guide bush motor. By driving the guide bush motor, the guide bush sleeve 62 rotates with the axis AL direction as the rotation center. Note that the guide bush motor, the pulley 621, and the timing belt 623 may be omitted. When these components are omitted, the guide bush sleeve 62 is rotated in conjunction with the rotation of the workpiece W together with the guide bush 63, the retraction sleeve 64, and the differential attachment/detachment body 65. Furthermore, the guide bush sleeve 62 may be fixed to the guide bush body 61 so as to be incapable of rotating. When the guide bush sleeve 62 is fixed, during rotation of the workpiece W, the guide bush 63 slides in the rotation direction together with the workpiece W. The inner ring nut 622 has a substantially annular shape, and inner ring nut holes 622a penetrating in a front-rear direction are formed in a plurality of locations in a circumferential direction thereof.

The guide bush 63 is disposed in an inside front part of the guide bush sleeve 62. A center axis of the guide bush 63 matches the axis AL. A sliding surface 63a that slides together with the workpiece W is formed on the front-side inner periphery of the guide bush 63. Further, an outer peripheral tapered surface 63b that increases in diameter toward the front is formed on a front-side outer peripheral surface of the guide bush 63. By moving the guide bush 63 rearward in a state where the outer peripheral tapered surface 63b and the inner peripheral tapered surface 620a of the guide bush sleeve 62 are in contact with each other, the sliding surface 63a on the front-side part of the guide bush 63 decreases in diameter in a diametrical direction against the elasticity of the guide bush 63 itself. In other words, the inner diameter of the guide bush 63 changes in accordance with the relative positions of the guide bush sleeve 62 and the guide bush 63 in the axis AL direction. A part of the outer peripheral surface of the guide bush 63 is formed to have a slightly smaller diameter than the inner peripheral surface of the front part of the guide bush sleeve 62 apart from the inner peripheral tapered surface 620a. This part of the outer peripheral surface serves as a guide when the guide bush 63 is inserted into the guide bush sleeve 62.

A key groove 63c extending in the axis AL direction and a bush screw 63d are formed in the rear-side outer peripheral surface of the guide bush 63. A lower end of an anti-rotation pin 631 inserted into a pin hole formed in the guide bush sleeve 62 is inserted into the key groove 63c. The guide bush 63 is prevented from rotating relative to the guide bush sleeve 62 by the anti-rotation pin 631 and the key groove 63c. Accordingly, the guide bush sleeve 62 and the guide bush 63 rotate integrally with the axis AL as the rotation center. Meanwhile, movement of the guide bush 63 in the axis AL direction is not restricted by the anti-rotation pin 631. The bush screw 63d is a male screw having an axial direction in the axis AL direction and a thread pitch of 1.0. Note that the guide bush 63 is a commercially available, general purpose component that is prepared for each inner diameter of the sliding surface 63a, and the thread pitch thereof is basically set at 1.0 regardless of the inner diameter of the sliding surface 63a. The unit of the thread pitch is mm, and this applies likewise hereinafter.

The retraction sleeve 64 is disposed in an inside rear part of the guide bush sleeve 62. The center axis of the retraction sleeve 64 matches the axis AL. A first screw 64a that engages with the bush screw 63d is formed on a front-side inner peripheral surface of the retraction sleeve 64. FIGS. 2 and 3 show a state in which the bush screw 63d and the first screw 64a are engaged. The first screw 64a is a female screw having an axial direction in the axis AL direction and having the same thread pitch as the bush screw 63d. By changing the number of engaged screw threads between the bush screw 63d and the first screw 64a in an adjustment process, the relative positions of the guide bush 63 and the retraction sleeve 64 change, although the degree of change differs between rough adjustment and fine adjustment, to be described below.

A second screw 64b is formed on a rear-side outer peripheral surface of the retraction sleeve 64. The second screw 64b is a male screw having an axial direction in the axis AL direction and a thread pitch of 0.8. Note that the thread pitch of the second screw 64b may be set at any value as long as the value thereof differs from that of the first screw 64a. However, the difference from the thread pitch of the first screw 64a is preferably less than the thread pitch (in this embodiment, 1.0) of the first screw 64a. Further, a slit 64c that divides the second screw 64b in the axis AL direction is formed in the rear-side part of the retraction sleeve 64. The slit 64c is formed in two locations along the circumferential direction of the retraction sleeve 64 so as to extend partially in the circumferential direction. Two screw holes recessed in the axis AL direction are formed in positions on a rear end surface of the retraction sleeve 64 that correspond to central parts of the slits 64c in the circumferential direction. Hole-filling pins 641 having a shorter length than the depth of the screw holes are inserted into the bottom side (the front) of the screw holes. Furthermore, hexagon socket set screws 642 are screwed into the screw holes on the edge side (the rear) of the hole-filling pins 641. A part of the outer peripheral surface of the retraction sleeve 64 is formed to have a slightly smaller diameter than the inner peripheral surface of the rear part of the guide bush sleeve 62. This part of the outer peripheral surface serves as a guide when the retraction sleeve 64 is inserted into the guide bush sleeve 62.

As shown in FIG. 2, a plurality of tool insertion holes 64d recessed in the axis direction are formed in the rear end surface of the retraction sleeve 64. When the retraction sleeve 64 is capable of rotating relative to the differential attachment/detachment body 65 or when the differential attachment/detachment body 65 is not fixed to the guide bush sleeve 62, tool projections are inserted into the tool insertion holes 64d, and by rotating the tool, the retraction sleeve 64 can be rotated with the axis AL as the rotation center.

As noted above, the differential attachment/detachment body 65 has a substantially annular shape, and a differential screw 65a that engages with the second screw 64b is formed on an inner peripheral surface thereof. FIGS. 2 and 3 show a state in which the second screw 64b and the differential screw 65a are engaged. The differential screw 65a is a female screw having an axial direction in the axis AL direction and having the same thread pitch as the second screw 64b. When the hexagon socket set screws 642 are screwed in further in a state where the second screw 64b and the differential screw 65a are engaged and front ends of the hexagon socket set screws 642 are in contact with rear ends of the hole-filling pins 641, the width of the slit 64c increases. Accordingly, the second screw 64b on the front side of the slit 64c and the second screw 64b on the rear side of the slit 64c separate from each other, leading to an increase in pressing force between the second screw 64b and the differential screw 65a, and as a result, a non-rotatable state in which the retraction sleeve 64 and the differential attachment/detachment body 65 are incapable of rotating relative to each other is established. Conversely, by rotating the hexagon socket set screws 642 in a loosening direction, the second screw 64b on the front side of the slit 64c and the second screw 64b on the rear side of the slit 64c return to their original interval, and as a result, a rotatable state in which the retraction sleeve 64 and the differential attachment/detachment body 65 are capable of rotating relative to each other is established. In other words, the hexagon socket set screws 642 act as a switching member for switching the retraction sleeve 64 and the differential attachment/detachment body 65 between the non-rotatable state and the rotatable state. FIGS. 2 and 3 show the non-rotatable state. Furthermore, in the non-rotatable state, the front end of the differential attachment/detachment body 65 contacts the rear end of the guide bush sleeve 62 (the inner ring nut 622), and thus the differential attachment/detachment body 65 acts as a forward movement preventing means for preventing the retraction sleeve 64 from moving forward.

As shown in FIG. 3, a plurality of stepped holes 65b penetrating in the front-rear direction are formed in the differential attachment/detachment body 65. The stepped holes 65b are holes having a large diameter at the rear and a small diameter at the front, and are formed at the same angular intervals as the inner nut screw holes 622a. When the differential attachment/detachment body 65 is to be fixed to the guide bush sleeve 62, the stepped holes 65b are respectively aligned with the inner nut screw holes 622a, whereupon fastening screws 651 are inserted into the stepped holes 65b. Then, by screwing the fastening screws 651 into the inner nut screw holes 622a, screw head portions of the fastening screws 651 press the step portions of the stepped holes 65b, whereby the differential attachment/detachment body 65 is fixed to the guide bush sleeve 62. Conversely, by removing the fastening screws 651, the differential attachment/detachment body 65 is released from the guide bush sleeve 62. The fastening screws 651 correspond to an example of a fastening member.

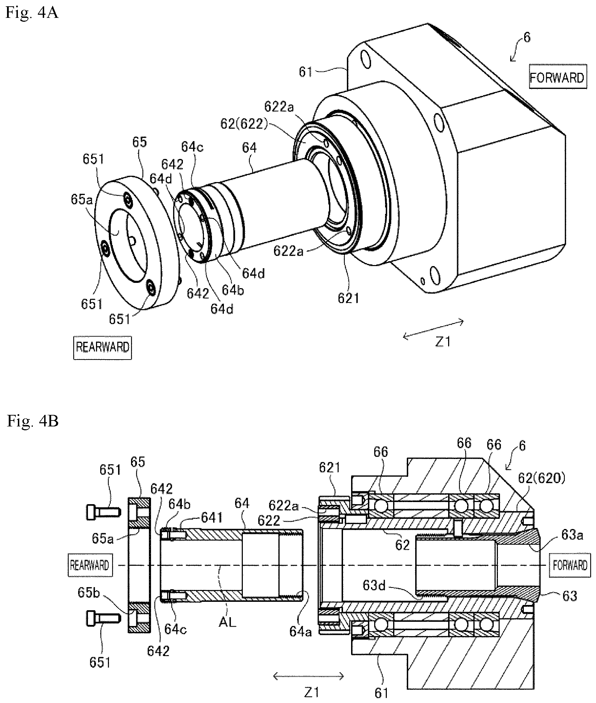

FIG. 4A is an exploded perspective view of the guide bush apparatus 6 shown in FIG. 2, and FIG. 4B is an exploded sectional view obtained by cutting the guide bush apparatus 6 shown in FIG. 2 on a vertical plane passing through the axis. Note that in FIG. 4A, the screw threads of the second screw 64b and the differential screw 65a are not shown. Further, FIG. 4A shows a state in which the fastening screws 651 are inserted into the stepped holes 65b of the differential attachment/detachment body 65, whereas FIG. 4B shows a state in which the fastening screws 651 have been removed from the stepped holes 65b in order to make the differential attachment/detachment body 65 and the fastening screws 651 easier to see.

As shown in FIGS. 4A and 4B, the retraction sleeve 64 and the differential attachment/detachment body 65 are formed separately. The retraction sleeve 64 and the differential attachment/detachment body 65 can be joined by engaging the second screw 64b with the differential screw 65a, and in this joined state, the retraction sleeve 64 and the differential attachment/detachment body 65 can be switched between the rotatable state and the non-rotatable state by the hexagon socket set screws 642 described above. Further, by removing the fastening screws 651 and releasing the engagement between the bush screw 63d and the first screw 64a, the retraction sleeve 64 can be removed from the guide bush sleeve 62 while remaining joined to the differential attachment/detachment body 65. Moreover, by releasing the engagement between the bush screw 63d and the first screw 64a, the guide bush 63 can also be removed from the guide bush sleeve 62.

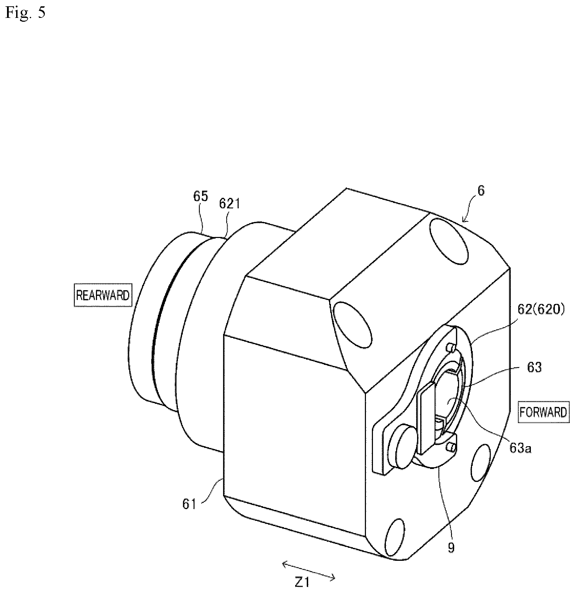

FIG. 5 is a perspective view showing, from slightly above and diagonally from the front, a state in which an anti-rotation jig 9 is attached to the guide bush apparatus 6 shown in FIG. 2.

As shown in FIG. 5, the anti-rotation jig 9 can be detachably attached to the guide bush body 61 in order to prevent rotation of the guide bush sleeve 62. The anti-rotation jig 9 is a substantially Y-shaped plate-form jig. The anti-rotation jig 9 is attached to the guide bush body 61 when the guide bush 63 is replaced or when the inner diameter of the guide bush 63 is adjusted.

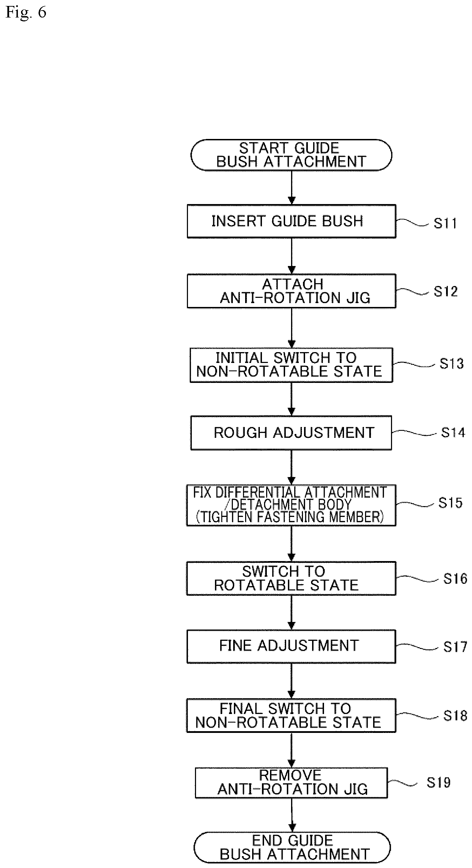

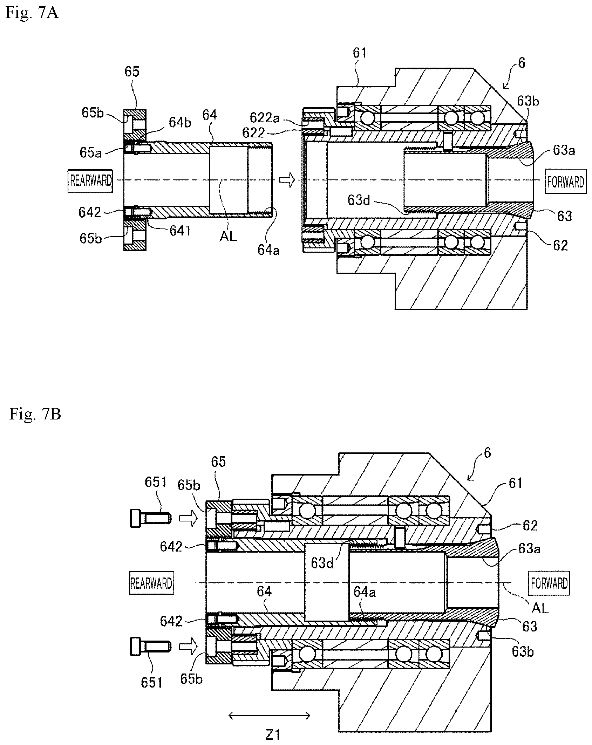

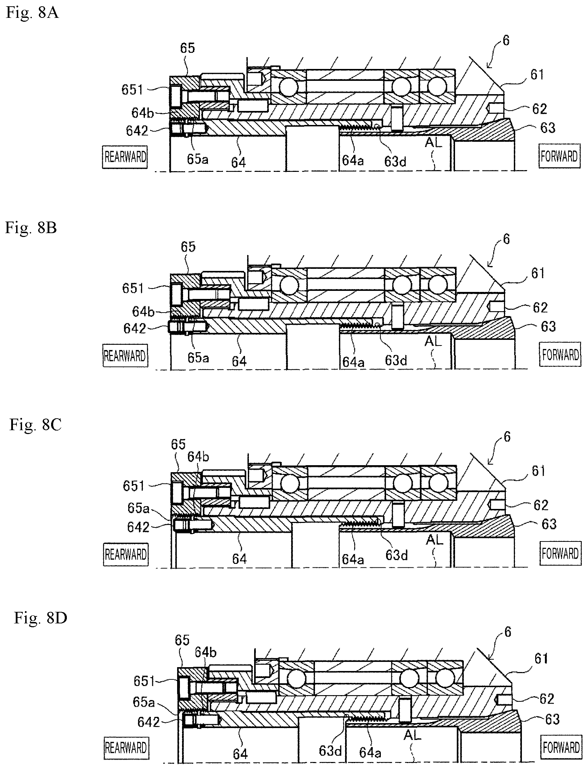

Hereinafter, a process for attaching the guide bush 63, the retraction sleeve 64, and the differential attachment/detachment body 65 to the guide bush sleeve 62 and a process for adjusting the inner diameter of the guide bush 63 will be described using FIG. 6 while also referring to FIGS. 7A, 7B, and 8A to 8D.

FIG. 6 is a flowchart showing the process for attaching the guide bush 63, the retraction sleeve 64, and the differential attachment/detachment body 65 to the guide bush sleeve 62 and the process for adjusting the inner diameter of the guide bush 63.

As shown in FIG. 6, first, an operator of the NC lathe 1 inserts the guide bush 63 into the guide bush sleeve 62 from the front, the guide bush sleeve 62 being supported by the guide bush body 61 to be free to rotate (step S11). The operator then attaches the anti-rotation jig 9 shown in FIG. 5 to the guide bush body 61 and locks the guide bush sleeve 62 so that the guide bush sleeve 62 does not rotate (step S12). Next, the operator engages the differential screw 65a of the differential attachment/detachment body 65 with the second screw 64b of the retraction sleeve 64, rotates the retraction sleeve 64 and the differential attachment/detachment body 65 relative to each other until the rear end surface of the retraction sleeve 64 and the rear end surface of the differential attachment/detachment body 65 are substantially aligned, and inserts the hexagon socket set screws 642 so as to set the retraction sleeve 64 and the differential attachment/detachment body 65 in the non-rotatable state (step S13). Hereinafter, the retraction sleeve 64 and the differential attachment/detachment body 65 in the non-rotatable state will sometimes be referred to as a retraction unit. Note that step S13 may be implemented before step S11 or step S12.

FIG. 7A is a sectional view showing the manner in which the retraction unit in which the retraction sleeve 64 and the differential attachment/detachment body 65 are integrated is inserted into the guide bush sleeve 62. Note that the anti-rotation jig 9 is not shown in FIG. 7A.

Having completed the process up to step S13, the operator inserts the retraction unit from the rear of the guide bush sleeve 62, as shown by a black-outlined arrow in FIG. 7A. The operator then rotates the retraction unit (the retraction sleeve 64) forward relative to the guide bush 63 so as to engage the first screw 64a of the retraction sleeve 64 with the bush screw 63d of the guide bush 63. By rotating the retraction unit further forward after the front end surface of the differential attachment/detachment body 65 impinges on the rear end surface of the guide bush sleeve 62, the guide bush 63 is retracted rearward such that the outer peripheral tapered surface 63b is pressed against the inner peripheral tapered surface 620a of the guide bush sleeve 62, and as a result, the guide bush 63 is reduced in diameter in the diametrical direction. Here, the operator inserts the workpiece W into the guide bush 63 and roughly adjusts the guide bush 63 by rotating the retraction unit forward while checking the sliding force of the workpiece W in the Z1-axis direction and the guiding function of the guide bush 63, and rotating the retraction unit in reverse if the sliding force is too strong (all of the above corresponds to step S14). Step S14 corresponds to an example of a rough adjustment step. Note that forward rotation means rotating the retraction sleeve 64 clockwise looking frontward from the rear of the guide bush apparatus 6, and reverse rotation means rotating the retraction sleeve 64 counterclockwise looking in the same direction. As described above, when the retraction sleeve 64 is rotated forward, the guide bush 63 moves backward relative to the guide bush sleeve 62 so as to decrease in diameter, and when the retraction sleeve 64 is rotated in reverse, the guide bush 63 moves forward relative to the guide bush sleeve 62 so as to increase in diameter.

FIG. 7B is a sectional view showing the manner in which the fastening screws 651 are fastened to the guide bush apparatus 6 once rough adjustment is complete. Note that the anti-rotation jig 9 is not shown in FIG. 7B.

Once the rough adjustment of step S14 is complete, the operator fixes the differential attachment/detachment body 65 to the guide bush sleeve 62 by inserting the fastening screws 651 into the stepped holes 65b, as shown by black-outlined arrows in FIG. 7B, and tightening the fastening screws 651 (step S15).

FIGS. 8A to 8D are sectional views of the guide bush apparatus 6, illustrating a rotation state switching process and a fine adjustment process. FIGS. 8A to 8D show the main parts of the upper side of the guide bush apparatus 6. Note that the anti-rotation jig 9 is not shown in FIGS. 8A to 8D.

As shown in FIG. 8A, in a state where step S15 is complete, the retraction unit is fixed to the guide bush sleeve 62. From this state, the operator loosens the hexagon socket set screws 642, as shown in FIG. 8B, so as to set the retraction sleeve 64 and the differential attachment/detachment body 65 in the rotatable state (step S16). Steps S15 and S16 correspond to an example of a switching step. As a result of steps S15 and S16, the retraction sleeve 64 becomes able to rotate with the axis AL as the rotation center in a state where the differential attachment/detachment body 65 is fixed to the guide bush sleeve 62. Note that step S15 may be executed after first executing step S16.

When the retraction sleeve 64 is rotated forward after step S16 is complete, as shown in FIG. 8C, the second screw 64b, which is engaged with the differential screw 65a, rotates forward, and as a result, the retraction sleeve 64 moves forward by the thread pitch of 0.8 mm per rotation. Meanwhile, when the first screw 64a, which is engaged with the bush screw 63d, rotates forward, the retraction sleeve 64 and the guide bush 63 attempt to move in a direction approaching each other by the thread pitch of 1 mm per rotation. As a result of these movements, the guide bush 63 is retracted rearward relative to the guide bush sleeve 62 by 0.2 mm, i.e., the difference between the thread pitches, per forward rotation of the retraction sleeve 64, and decreases in diameter accordingly. Conversely, when the retraction sleeve 64 is rotated in reverse, the guide bush 63 is pushed out forward relative to the guide bush sleeve 62 by 0.2 mm per rotation so as to increase in diameter. Here, the operator finely adjusts the inner diameter of the guide bush 63 by rotating the retraction sleeve 64 forward and in reverse relative to the guide bush 63 and the differential attachment/detachment body 65 while checking the sliding force of the workpiece W, which is inserted into the guide bush 63, in the Z1-axis direction and the guiding function of the guide bush 63 (all of the above corresponds to step S17). Step S17 corresponds to an example of a fine adjustment step.

Once fine adjustment is complete, the operator sets the retraction sleeve 64 and the differential attachment/detachment body 65 in the non-rotatable state by screwing in the hexagon socket set screws 642, as shown in FIG. 8D (step S18). Step S18 corresponds to an example of a final switching step. As a result, the guide bush 63, the retraction sleeve 64, and the differential attachment/detachment body 65 are fixed to the guide bush sleeve 62. Finally, the operator removes the anti-rotation jig 9 from the guide bush body 61 so that the guide bush sleeve 62 is free to rotate (step S19). Attachment of the guide bush 63, the retraction sleeve 64, and the differential attachment/detachment body 65 to the guide bush sleeve 62 and adjustment of the guide bush 63 are thus completed.

Next, a process for removing the retraction unit and the guide bush 63 from the guide bush sleeve 62 will be described. Note that when a workpiece W having a different outer diameter from the workpiece W machined up to this point is to be machined, the guide bush 63 is replaced in accordance with the outer diameter of the workpiece W to be machined next as a so-called setup operation. In the replacement operation, a process described below for removing the retraction unit and the guide bush 63 from the guide bush sleeve 62 is executed, whereupon the inner diameter of the new guide bush 63 is adjusted and the guide bush 63 and so on are fixed to the guide bush sleeve 62 through steps S11 to S19, excluding step S13.

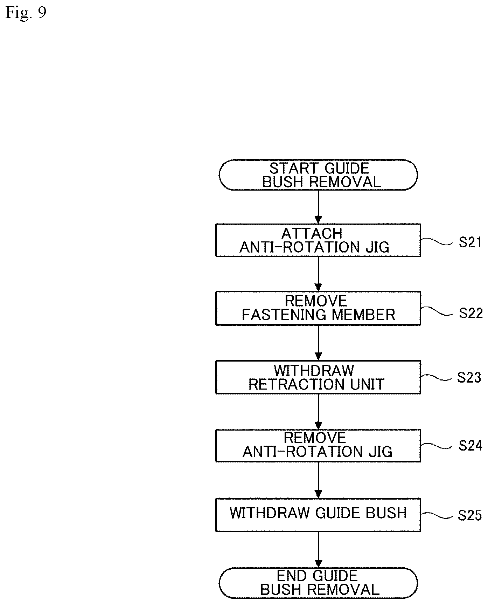

FIG. 9 is a flowchart showing a process for removing the retraction unit and the guide bush 63 from the guide bush sleeve 62.

As shown in FIG. 9, the operator first attaches the anti-rotation jig 9 to the guide bush body 61 and locks the guide bush sleeve 62 so that the guide bush sleeve 62 does not rotate (step S21). Next, the operator removes the fastening screws 651 so as to release the guide bush sleeve 62 from the retraction unit (the differential attachment/detachment body 65) (step S22). Next, the operator rotates the retraction unit (the retraction sleeve 64) in reverse in order to release the engagement between the bush screw 63d of the guide bush 63 and the first screw 64a of the retraction sleeve 64, and then withdraws the retraction unit from the guide bush sleeve 62 (step S23).

Next, the operator removes the anti-rotation jig 9 from the guide bush body 61 (step S24). Finally, the operator withdraws the guide bush 63 from the guide bush sleeve 62 (step S25). The operation for removing the retraction unit and the guide bush 63 from the guide bush sleeve 62 is thus completed.

According to the guide bush apparatus 6 of this embodiment, as described above, by rotating the retraction sleeve 64 in a state where the differential attachment/detachment body 65 is not fixed to the guide bush sleeve 62, the guide bush 63 can be moved relative to the guide bush sleeve 62 by a large amount in the axis AL direction, and as a result, the guide bush 63 can be roughly adjusted quickly. Then, in a state where the differential attachment/detachment body 65 is fixed to the guide bush sleeve 62, the engagement between the bush screw 63d and the first screw 64a and the engagement between the differential screw 65a and the second screw 64b act as a differential mechanism so that even when the retraction sleeve 64 performs a single rotation, the guide bush 63 displaces by only a very small amount relative to the guide bush sleeve 62, and as a result, the inner diameter of the guide bush 63 can be finely adjusted. Thus, the inner diameter of the guide bush 63 can be adjusted easily.

Furthermore, approximate adjustment is completed by the rough adjustment performed in the state where the differential attachment/detachment body 65 is not fixed to the guide bush sleeve 62, and therefore the retraction sleeve 64 need only be rotated a few times during the fine adjustment. Accordingly, a situation in which the position of the retraction sleeve 64 is greatly displaced in the axis AL direction by the fine adjustment is suppressed. Thus, the retraction sleeve 64 can be prevented from projecting rearward from the differential attachment/detachment body 65 by a large amount, and as a result, a restriction on the movement range of the spindle 3 in the Z 1-axis direction is reduced. Moreover, a situation in which a tool used in the setup operation comes into contact with the projecting part of the retraction sleeve 64, thereby impeding the setup operation, can also be suppressed.

Furthermore, the retraction sleeve 64 and the differential attachment/detachment body 65 are switched between the non-rotatable state and the rotatable state by screwing in the hexagon socket set screws 642, and therefore the rotatable/non-rotatable state can be changed easily.

Moreover, the thread pitch of the first screw 64a is set to be larger than the thread pitch of the second screw 64b, and therefore, during rough adjustment, which is performed in a state where the differential attachment/detachment body 65 is fixed to the guide bush sleeve 62, the amount by which the guide bush 63 displaces in the axis AL direction in response to a single rotation of the retraction sleeve 64 can be increased. Conversely, the thread pitch of the second screw 64b may be made larger than the thread pitch of the first screw 64a, but when the thread pitch of the second screw 64b is set to be larger, the inner diameter of the guide bush 63 decreases in response to forward rotation during rough adjustment and increases likewise in response to forward rotation during fine adjustment, and therefore the operator may become confused. In this embodiment, the thread pitch of the first screw 64a is set to be larger than the thread pitch of the second screw 64b so that during both rough adjustment and fine adjustment, the inner diameter of the guide bush 63 decreases in response to forward rotation and increases in response to reverse rotation, and therefore the operator can be prevented from becoming confused. Furthermore, although this also depends on the direction in which the retraction sleeve 64 is rotated, when the thread pitch of the second screw 64b is large, the amount by which the retraction sleeve 64 projects from the differential attachment/detachment body 65 during fine adjustment may increase compared to when the thread pitch is small. In this embodiment, by making the thread pitch of the second screw 64b smaller than the thread pitch of the first screw 64a, even when the retraction sleeve 64 projects rearward from the differential attachment/detachment body 65 during fine adjustment, the amount by which the retraction sleeve 64 projects can be reduced. Thus, the amount by which the retraction sleeve 64 projects rearward is reduced, thereby reducing the likelihood that readjustment will be required. As a result, adjustment of the inner diameter of the guide bush 63 can be made even easier.

Next, the guide bush apparatus 6 according to a second embodiment will be described. In the following description, constituent elements with identical names to the constituent elements described heretofore have been allocated the same reference symbols as those used heretofore, and duplicate description thereof has sometimes been omitted.

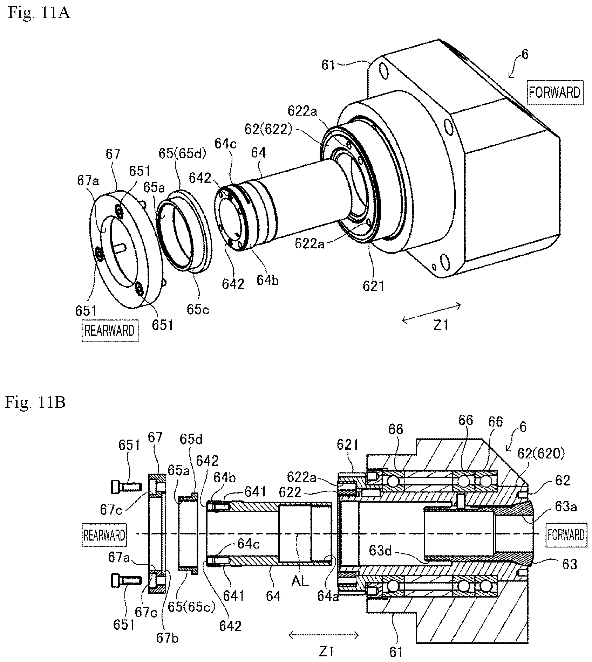

FIG. 10 is a similar sectional perspective view to FIG. 2, seen from slightly above and diagonally from behind and obtained by cutting the guide bush apparatus 6 according to the second embodiment on a vertical plane passing through the axis AL. Further, FIG. 11A is an exploded perspective view of the guide bush apparatus 6 shown in FIG. 10, and FIG. 11B is an exploded sectional view obtained by cutting the guide bush apparatus 6 shown in FIG. 10 on a vertical plane passing through the axis AL. Note that in FIG. 10, shading indicating the cross-section has not been added. Further, in FIG. 11A, the screw threads of the second screw 64b and the differential screw 65a are not shown.

As shown in FIGS. 10, 11A, and 11B, the guide bush apparatus 6 according to the second embodiment differs from the previous embodiment in the shape of the differential attachment/detachment body 65 and in being provided with a retaining member 67. The differential attachment/detachment body 65 is formed in a cylindrical shape having a flange, in which a cylindrical portion 65c formed at the rear and a flange portion 65d that is formed at the front and projects toward the outer diameter side from the cylindrical portion 65c are formed integrally.

The retaining member 67 has a substantially annular shape. An inner peripheral surface of the retaining member 67 is constituted by a rear inner peripheral surface 67a and a front inner peripheral surface 67b having a larger diameter than the rear inner peripheral surface 67a. The rear inner peripheral surface 67a has a slightly larger diameter than the cylindrical portion 65c of the differential attachment/detachment body 65 and a smaller diameter than the flange portion 65d. The front inner peripheral surface 67b has a larger diameter than the flange portion 65d. Further, a plurality of retaining member stepped holes 67c penetrating in the front-rear direction are formed in the retaining member 67. The retaining member stepped holes 67c are holes having a large diameter at the rear and a small diameter at the front, and are formed at the same angular intervals as the inner nut screw holes 622a. Note that FIG. 11A shows a state in which the fastening screws 651 are inserted into the retaining member stepped holes 67c of the retaining member 67, whereas FIG. 11B shows a state in which the fastening screws 651 have been removed from the retaining member stepped holes 67c in order to make the retaining member 67 and the fastening screws 651 easier to see.

In the guide bush apparatus 6 according to the second embodiment, by tightening the fastening screws 651, the differential attachment/detachment body 65 is clamped between the retaining member 67 and the guide bush sleeve 62 (the inner ring nut 622), whereby the differential attachment/detachment body 65 is fixed to the guide bush sleeve 62. FIG. 10 shows a state in which the differential attachment/detachment body 65 is fixed to the guide bush sleeve 62. Further, by loosening the fastening screws 651 so that the tightened fastening screws 651 are loosened, the differential attachment/detachment body 65 is released from the guide bush sleeve 62 so as to become free to rotate. Note that in order to remove the differential attachment/detachment body 65 and the retaining member 67 from the guide bush sleeve 62, it is necessary to remove the fastening screws 651 from the guide bush sleeve 62. To put it another way, in a state where the fastening screws 651 have merely been loosened so that the screw portions of the fastening screws 651 remain engaged with the inner nut screw holes 622a, the differential attachment/detachment body 65 is free to rotate relative to the guide bush sleeve 62 but remains attached to the guide bush sleeve 62. Furthermore, in this state, the retaining member 67 also remains attached to the guide bush sleeve 62.

Likewise with the guide bush apparatus 6 according to the second embodiment, the process for attaching the guide bush 63, the retraction sleeve 64, and the differential attachment/detachment body 65 to the guide bush sleeve 62 and the process for adjusting the inner diameter of the guide bush 63 can be implemented by similar processes to those of the previous embodiment. Note, however, that in step S15, rather than directly fixing the differential attachment/detachment body 65 to the guide bush sleeve 62 using the fastening screws 651, the differential attachment/detachment body 65 is fixed by clamping the differential attachment/detachment body 65 between the retaining member 67 and the guide bush sleeve 62 using the fastening screws 651. Moreover, the process for removing the retraction unit and the guide bush 63 from the guide bush sleeve 62 can also be implemented by a similar process to that of the previous embodiment. Note, however, that the second embodiment differs from the previous embodiment in that when the guide bush 63 is to be replaced, the guide bush 63 can be replaced by attaching and detaching the guide bush 63 to and from the guide bush sleeve 62 without removing the retraction unit from the guide bush sleeve 62.

FIG. 12 is a sectional view showing the manner in which the guide bush 63 is replaced in the guide bush apparatus 6 shown in FIG. 10.

When the guide bush 63 is removed in order to replace the guide bush 63, the operator first locks rotation of the guide bush sleeve 62 using the anti-rotation jig 9 (see FIG. 5). Note that the anti-rotation jig 9 is not shown in FIG. 12. Then, as shown in FIG. 12, by loosening the fastening screws 651, the differential attachment/detachment body 65 is released from the guide bush sleeve 62, and by rotating the retraction unit in reverse, as shown by dot-dot-dash lines in FIG. 12, the guide bush 63 is pushed out frontward. Next, by rotating the retraction sleeve 64 in reverse together with the differential attachment/detachment body 65, the engagement between the bush screw 63d and the first screw 64a is released, whereby it becomes possible to withdraw the guide bush 63 from the guide bush sleeve 62.

Next, after withdrawing the previously attached guide bush 63 from the guide bush sleeve 62, a new guide bush 63' is attached to the guide bush sleeve 62. The guide bush 63 and the new guide bush 63' have the same outer peripheral shape and differ from each other only in the inner diameter of the sliding surface 63a part. To attach the new guide bush 63', the new guide bush 63' is inserted into the guide bush sleeve 62, as shown by a thick black arrow in FIG. 12, and by rotating the retraction unit forward, the bush screw 63d is engaged with the first screw 64a. Next, by rotating the retraction unit forward, the guide bush 63 is retracted rearward, whereby the guide bush 63 is roughly adjusted in a similar manner to step S14. Next, by executing the processing of steps S15 to S19, the operation for attaching the new guide bush 63' to the guide bush sleeve 62 is completed. Note that in step S15 of this processing, the differential attachment/detachment body 65 is fixed to the guide bush sleeve 62 by clamping the differential attachment/detachment body 65 between the retaining member 67 and the guide bush sleeve 62 using the fastening screws 651.

Likewise with the guide bush apparatus 6 of the second embodiment, similar effects to those of the previous embodiment are achieved. Moreover, by loosening the tightened fastening screws 651 and rotating the retraction sleeve 64, the guide bush 63 can be attached to and detached from the guide bush sleeve 62 without removing the fastening screws 651, the differential attachment/detachment body 65, and the retaining member 67 from the guide bush sleeve 62. As a result, an effect is achieved in that there is no danger of the fastening screws 651 or the differential attachment/detachment body 65 falling out during the operation to replace the guide bush 63.

The present invention is not limited to the embodiments described above, and various amendments may be applied thereto within the scope set forth in the claims. For example, in the description of the embodiments, the guide bush apparatus 6 provided in the NC lathe 1 is cited as an example, but the guide bush apparatus 6 of the present invention may be applied to a machine tool other than the NC lathe 1. Further, the NC lathe 1 may be provided with a back spindle, a back headstock, and a back spindle tool post opposing the spindle 3. Furthermore, the bush screw 63d of the guide bush 63 may be a female screw, and the first screw 64a of the retraction sleeve 64 may be a male screw. Moreover, the second screw 64b of the retraction sleeve 64 may be a female screw, and the differential screw 65a of the differential attachment/detachment body 65 may be a male screw. In addition, steps S13 and S16 may be omitted, and instead, a process for engaging the differential screw 65a of the differential attachment/detachment body 65 with the second screw 64b of the retraction sleeve 64 and rotating the differential attachment/detachment body 65 clockwise when looking forward from the rear of the guide bush apparatus 6 until the front end surface of the differential attachment/detachment body 65 impinges on the rear end surface of the guide bush sleeve 62 may be provided after step S14. Note, however, that in this case, the rough adjustment of step S14 is implemented by eye, and therefore the guide bush 63 is preferably attached by executing the processes of steps S11 to S19.

Note that even with regard to constituent elements that are included only in the embodiments or modified examples described above, the constituent requirements of these elements may be applied to other embodiments or other modified examples.

## Claims

1. A guide bush apparatus that supports a rod-shaped workpiece so that the workpiece is free to slide in the axis direction of the workpiece, the guide bush apparatus comprising:
a guide bush sleeve;
a guide bush that is disposed inside the guide bush sleeve, has a bush screw formed thereon,
and has an inner diameter that changes in accordance with the relative position thereof relative to the guide bush sleeve in the axis direction;
a retraction sleeve which is disposed inside the guide bush sleeve and on which a first screw that engages with the bush screw and a second screw having a different thread pitch from the first screw are formed; and
a differential attachment/detachment body on which a differential screw that engages with the second screw is formed, and which can be fixed to and released from the guide bush sleeve.

2. The guide bush apparatus according to claim 1, comprising a switching member for switching between a non-rotatable state in which relative rotation between the retraction sleeve and the differential attachment/detachment body is impossible, and a rotatable state in which relative rotation between the retraction sleeve and the differential attachment/detachment body is possible.

3. The guide bush apparatus according to claim 1, wherein the first screw has a larger thread pitch than the second screw.

4. The guide bush apparatus according to any one of claims 1 to 3, comprising a retaining member with which the differential attachment/detachment body is fixed to the guide bush sleeve by tightening a fastening member so that the differential attachment/detachment body is clamped between the guide bush sleeve and the retaining member, wherein the differential attachment/detachment body is released from the retaining member by loosening the tightened fastening member, whereby the differential attachment/detachment body becomes free to rotate relative to the guide bush sleeve.

5. An adjustment method for a guide bush apparatus that supports a rod-shaped workpiece so that the workpiece is free to slide in the axis direction of the workpiece, the guide bush apparatus comprising
a guide bush sleeve,
a guide bush having an inner diameter that changes in accordance with a relative position thereof relative to the guide bush sleeve in the axis direction,
a retraction sleeve on which a first screw that engages with a bush screw formed on the guide bush and a second screw having a different thread pitch from the first screw are formed, and a differential attachment/detachment body on which a differential screw that engages with the second screw is formed,
the adjustment method comprising:
a rough adjustment step for moving the guide bush relative to the guide bush sleeve in the axis direction by rotating the retraction sleeve, which is in a non-rotatable state so as to be incapable of rotating relative to the differential attachment/detachment body, relative to the guide bush;
a switching step for establishing a rotatable state in which relative rotation between the retraction sleeve and the differential attachment/detachment body is possible by fixing the differential attachment/detachment body to the guide bush sleeve following completion of the rough adjustment step; and
a fine adjustment step for moving the guide bush relative to the guide bush sleeve in the axis direction by rotating the retraction sleeve relative to the guide bush and the differential attachment/detachment body following completion of the switching step.
